# EUROPEAN PATENT APPLICATION

(11) **EP 4 626 139 A1**
(43) Date of publication of application: **01.10.2025**
(21) Application number: 24863832.2
(22) Date of filing: 24.07.2024
(51) Int. Cl.: H05B 3/02, B60H 1/22

(54) **ELECTRIC HEATER AND CIRCULATION CHAMBER ASSEMBLY THEREOF, AND ELECTRIC VEHICLE**

(30) Priority: 07.02.2024 CN 202410174993
(71) Applicant: Zhenjiang Helmholtz Heat Transfer Trans System Co., Ltd., Zhenjiang, Jiangsu 212002 (CN)
(72) Inventor: LIU, Bo, Zhenjiang Jiangsu 212002 (CN); XU, Jian, Zhenjiang Jiangsu 212002 (CN); SHEN, Zhiwen, Zhenjiang Jiangsu 212002 (CN); YANG, Cheng, Zhenjiang Jiangsu 212002 (CN); REN, Yingmu, Zhenjiang Jiangsu 212002 (CN); WEI, Xianyu, Zhenjiang Jiangsu 212002 (CN); CHANG, Tao, Zhenjiang Jiangsu 212002 (CN); JIANG, Yi, Zhenjiang Jiangsu 212002 (CN)
(74) Representative: Håmsø Patentbyrå AS
(86) International application number: PCT/CN2024/107161
(87) International publication number: WO 2025/167000

(57) **Abstract**

The present application discloses an electric heater and a circulation chamber assembly thereof and an electric vehicle, the circulation chamber assembly (200) includes a flow channel portion, two main flow channels, and a fin pressing plate (230), the flow channel portion includes a plurality of fluid channels arranged horizontally, the two main flow channels are respectively arranged above two ends of the flow channel portion, and the fin pressing plate (230) is arranged above the flow channel portion, and two side edges of the fin pressing plate (230) protrude into the main flow channels to allow fluid to flow between the main flow channels and the flow channel portion by bypassing the two side edges of the fin pressing plate (230). In the circulation chamber assembly of the present application, the fluid flows between the main flow channels and the flow channel portion by bypassing the edges of the fin pressing plate under the action of the fin pressing plate, so that the fluid can flow through two end regions of the flow channel portion, the heat exchange area is increased, and the heat exchange efficiency is also improved.

## Description

### Technical Field

The present application relates to the field of electric heating apparatuses, and more particularly to an electric heater, a circulation chamber assembly thereof and an electric vehicle.

### Background

Existing new energy vehicles employ various types of electric heaters in response to their respective vehicle thermal management requirements. Wherein, the film heater using thin-film and thick film technologies has advantages of high-power density, high heat exchange efficiency, and precise control of heating power compared to the PTC heater. Due to the preparation process of the heating elements, a flat-plate structure is typically adopted, i.e., a thin-layer heating element is directly prepared on the bottom and/or top of the circulation chamber of the heater. This results in a relatively large horizontal projection area and a small thickness for the film heater. Additionally, the film heater often adopts a parallel and/or isolated flow channel design, thus requiring a main flow channel to distribute the cooling medium into each flow channel. Since there is no additional heat dissipation structure (such as a heat dissipation column/a fin) within the main flow channel, the heating element cannot be arranged below the main flow channel. Consequently, the horizontal projection area of the film heater not only includes the horizontal projection area of the heating element but also the horizontal projection area of the main flow channel, leading to a larger horizontal projection area for the film heater and a relatively low coverage rate of the heating element on its supporting surface. These factors collectively adversely affect the heat exchange efficiency and total heating power of the electric heater.

Therefore, how to improve the heat exchange efficiency and total heating power with a smaller horizontal projection area has become the technical problem that needs to be addressed in this application.

### Summary

In view of this, the present application proposes an electric heater to improve the heat exchange efficiency and total heating power under the premise of a smaller horizontal projection area.

The present application provides a circulation chamber assembly of an electric heater, wherein the circulation chamber assembly includes a flow channel portion, two main flow channels, and a fin pressing plate, the flow channel portion includes a fin, the fin defines a plurality of fluid channels arranged horizontally, the two main flow channels are respectively arranged above two ends of the flow channel portion, and the fin pressing plate compressively locates the fin from above, and two side edges of the fin pressing plate protrude into the main flow channels to allow fluid to flow between the main flow channels and the flow channel portion by bypassing the two side edges of the fin pressing plate.

Optionally, the circulation chamber assembly includes two ports located on a same side of the flow channel portion, and the two main flow channels communicate with the two ports, respectively.

Optionally: from the side where the ports are located toward the other side of the flow channel portion, the flow cross sections of the two main flow channels gradually decrease; and/or, the two main flow channels are symmetrically disposed about a central plane between the two ports.

Optionally, from the side where the ports are located toward the other side of the flow channel portion, the edges of the fin pressing plate (230) are gradually inwardly retracted.

Optionally, the edge of the fin pressing plate includes a first portion capable of covering an end of the flow channel portion and a second portion which exposes the end of the flow channel portion, the first portion is provided with a baffle portion extending vertically downward, preferably, a vertical extension length of the baffle portion gradually decreases in a direction toward the second portion; and/or, in a direction away from the first portion, the width l of the second portion gradually decreases.

Optionally, an extending direction of the fluid channel is perpendicular to an extending direction of the main flow channel.

Optionally, the flow channel portion includes a fin, the fin includes a plurality of corrugated fin portions, the plurality of fin portions are arranged side by side, and the waveforms of the adjacent fin portions are arranged in a staggered manner.

Optionally, the circulation chamber assembly includes a bottom plate and a top cover, the bottom plate, the fin pressing plate and top cover together define the main flow channels and a space for arranging the flow channel portion.

Optionally: the bottom plate, the fin, the fin pressing plate and the top cover are fixed by brazing; and/or, the top cover includes a first region defining the main flow channel, the first region being provided with a first temperature sensing unit; and/or, the top cover includes a second region defining the space of the flow channel portion, the second region being provided with a second temperature sensing unit.

The present application also provides an electric heater including the circulation chamber assembly of the electric heater of the present application.

Optionally, the electric heater includes a heating element arranged below the circulation chamber assembly corresponding to the flow channel portion, preferably, a horizontal projection of the flow channel portion on an arrangement plane of the fluid channels is located inside a horizontal projection of the heating element on the plane, and an edge of the horizontal projection of the main flow channel on the plane is located outside the horizontal projection of the heating element on the plane.

Optionally, the heating element is a film heating element, preferably a thin-film heating element.

Optionally, the electric heater includes a PCB assembly and an electrode for connecting a connecting end of the heating element to the PCB assembly, one end of the electrode and the connecting end are bonded and fixed by conductive adhesive, the PCB assembly is provided with a socket for plugging the other end of the electrode.

The present application also provides an electric vehicle, wherein the electric vehicle includes the electric heater of the present application.

According to the technical solution of the present application, the main flow channel is disposed above two ends of the flow channel portion, the fluid flows between the main flow channels and the flow channel portion by bypassing the edges of the fin pressing plate under the action of the fin pressing plate, so that the fluid can flow through two end regions of the flow channel portion, the heat exchange area is increased, and the heat exchange efficiency is also improved.

Other features and advantages of the present application will be described in detail in the Detailed Description section that follows.

### Brief Description of Drawings

The accompanying drawings, which form a part of this application, are included to provide a further understanding of the application, and exemplary embodiments of the application and description thereof serve to explain the application. In the drawings:

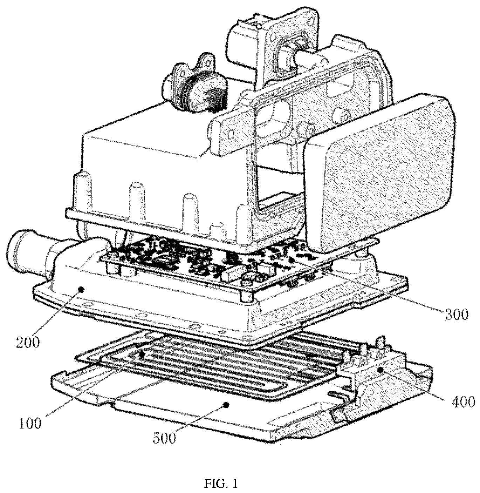

FIG. 1 is an exploded perspective view of the electric heater according to an embodiment of the present application;
FIG. 2 is a perspective view of the circulation chamber assembly of FIG. 1;
FIG. 3 is a cross-sectional view of FIG. 2;
FIG. 4 is an enlarged partial view of FIG. 3;
FIG. 5 is a view of FIG. 2 with the top cover removed;
FIG. 6 is a view of the fin portion of FIG. 2;
FIG. 7 is a partial front view of FIG. 6;
FIG. 8 is a cross-sectional view of the heating element of FIG. 1;
FIG. 9 is a partially sectional perspective view showing the electrode connection structure of the electric heater of FIG. 1;
FIG. 10 is a partially sectional view showing the circulation chamber assembly of FIG. 2; and
FIG. 11 is a top view of the fin pressing plate according to another embodiment of the present application.

### Detailed Description

The technical solutions of the present application will be explained in detail below with reference to the accompanying drawings and in combination with the embodiments.

According to one aspect of the present application, a circulation chamber assembly of an electric heater is provided, wherein the circulation chamber assembly 200 includes a flow channel portion S, two main flow channels, and a fin pressing plate 230, the flow channel portion S includes a fin 240, the fin 240 defines a plurality of fluid channels arranged horizontally, the two main flow channels are respectively arranged above two ends of the flow channel portion, and the fin pressing plate 230 compressively locates the fin 240 from above, and two side edges of the fin pressing plate 230 protrude into the main flow channels to allow fluid to flow between the main flow channels and the flow channel portion by bypassing the two side edges of the fin pressing plate 230.

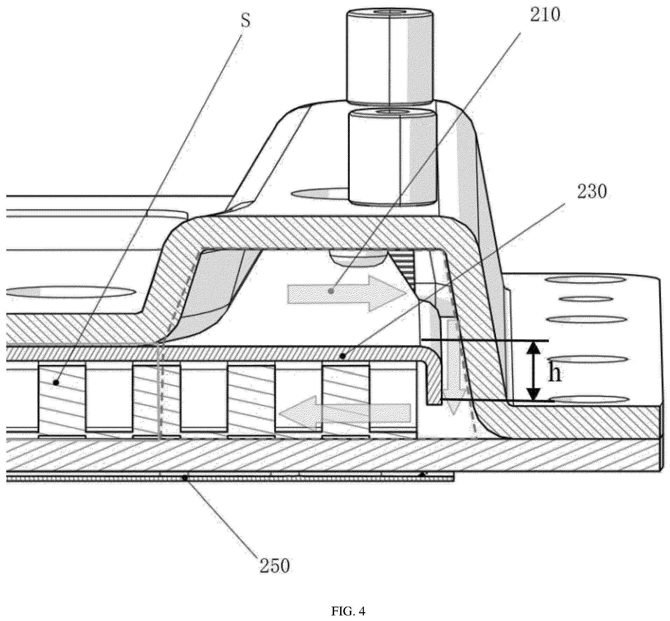

In the present application, the main flow channels are arranged above two ends of the flow channel portion, the fluid flows between the main flow channels and the flow channel portion by bypassing the edges of the fin pressing plate 230 under the action of the fin pressing plate 230 (the path of the fluid flowing from an inlet main flow channel to the flow channel portion is indicated by the yellow arrows in FIG. 4, meaning that the fluid does not directly enter the flow channel portion outlined in green from the inlet main flow channel). This allows the fluid to flow through the two end regions of the flow channel portion (i.e., the flow channel portion within the areas outlined in red in FIG. 4), thereby increasing the heat exchange area (i.e., the fluid can exchange heat with the heating element beneath the two end regions) and enhancing the heat exchange efficiency.

In addition, a turbulent flow can be formed when the fluid flows between the main flow channels and the flow channel portion to facilitate the heat exchange, so that the heat exchange efficiency can be further improved.

According to another aspect of the present application, there is provided an electric heater including the circulation chamber assembly of the electric heater of the present application.

In the electric heater of the present application, a heating element may be provided to heat the fluid flowing through the circulation chamber assembly 200. In particular, the electric heater may include a heating element arranged below the circulation chamber assembly 200 corresponding to the flow channel portion.

Wherein, the heating element may only extend to cover a region below the flow channel portion, that is, the horizontal projection of the heating element, i.e. the projection of the heating element on a horizontal plane in the vertical direction, locates within the contour of the horizontal projection of the flow channel portion on the same horizontal plane.

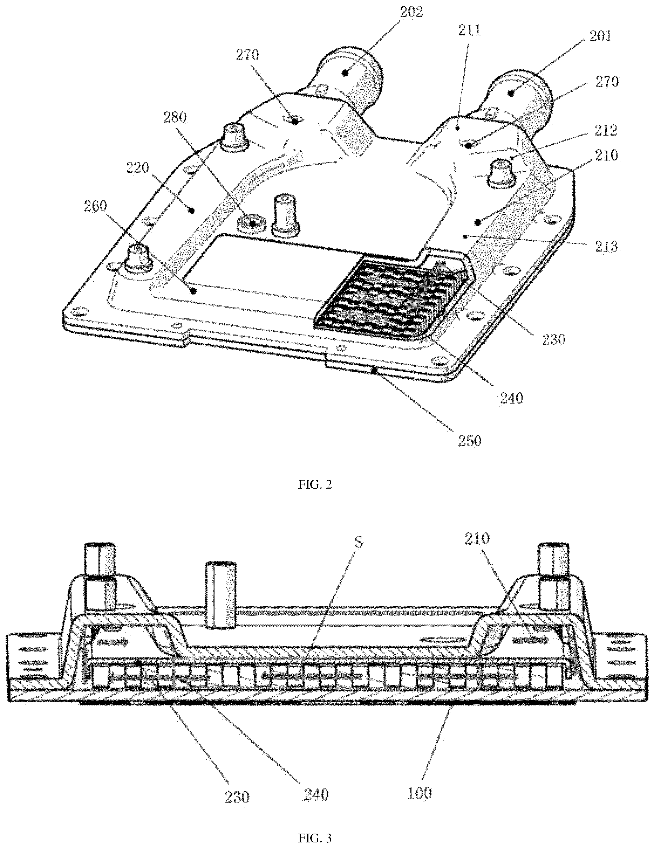

Due to the use of the circulation chamber assembly of the present application, the main flow channels are arranged above the two ends of the flow channel portion in a laminated manner, so that the heating element provided below the corresponding flow channel portion can have overlapping horizontal projection portions with the main flow channels, thereby increasing the total power of heat generation. Thus, preferably, the heating element can be made to extend over a partial region below the main flow channel. In particular, a horizontal projection of the flow channel portion on an arrangement plane of the fluid channels may be located inside a horizontal projection of the heating element on the plane, and an edge of the horizontal projection of the main flow channel on the plane is located outside the horizontal projection of the heating element on the plane. More specifically, as shown in FIGS. 2 and 3, two side edges of the thin-film heating element 100 as a heating element extend beyond the edges of the fin 240 and are located inside the outer side edges of the inlet main flow channel 210 and the outlet main flow channel 220.

In addition, the circulation chamber assembly 200 may include two ports on the same side of the flow channel portion, and the two main flow channels communicate with the two ports, respectively. In particular, as shown in FIG. 2, the two ports are located on the upper side of the flow channel portion, and the two ports may serve as an inlet 201 and an outlet 202 of the fluid flowing into and out of the circulation chamber assembly 200, respectively, and the main flow channel connecting the inlet 201 may serve as an inlet main flow channel 210, and the main flow channel connecting the outlet 202 may serve as an outlet main flow channel 220.

The fluid flows along the inlet main flow channel 210 after entering from the inlet 210. During the flow along the inlet main flow channel 210, the fluid gradually bypasses the edges of the fin pressing plate 230 into the flow channel portion. The heated fluid flows through the flow channel portion gradually enters the outlet main flow channel 220 from the other side of the fin pressing plate 230 and is finally output from the outlet 202.

In order to increase the fluidity of the fluid in the main flow channels and the flow channel portion, especially to achieve a uniform and dispersed flow of the fluid along the extending direction of the main flow channels between the flow channel portion and the main flow channels, it is preferred that the flow cross-sections of the two main flow channels gradually decrease from the side where the ports are located towards the other side of the flow channel portion. Thus, in a flow space of the circulation chamber assembly 200, a pressure loss can be formed so that the fluid enters or exits uniformly at various portions along the main flow channels. Specifically, as shown in FIG. 2, starting from the inlet 201, along the extending direction of the inlet main flow channel 210, the flow cross-section of the inlet main flow channel 210 gradually decreases, so that the fluid inside the inlet main flow channel 210 can uniformly enter the flow channel portion along the extending direction of the inlet main flow channel 210; starting from the outlet 202, along the extending direction of the outlet main flow channel 220, the flow cross-section of the outlet main flow channel 220 gradually decreases, so that the fluid in the flow channel portion can uniformly enter the outlet main flow channel 220 along the extending direction of the outlet main flow channel 220.

Wherein, the flow cross-section of the main flow channel may be gradually reduced in a suitable manner. For example, in an embodiment shown in FIG. 2, taking the inlet main flow channel 210 as an example, the inlet main flow channel 210 may have a first portion 211 with a larger flow cross-section at a portion close to the inlet 201, the end of the first portion 211 forms a step portion 212 with a vertical fall to reduce the flow cross-section by decreasing the height, and the step portion 212 connects a second portion 213 with a gradually contracted horizontal width. This configuration of the inlet main flow channel 210 not only achieves the desired effect of gradually decreasing the flow cross-section but also facilitates one-step molding through processes such as stamping.

To accommodate different applications, the two main flow channels may be symmetrically arranged about a central plane between the two ports. That is, the inlet main flow channel 210 shown in FIG. 2 can also be used as the outlet main flow channel 220, and the outlet main flow channel 220 can also be used as the inlet main flow channel 210.

For even distribution of the fluid among the fluid channels of the flow channel portion, it is preferred that the edges of the fin pressing plate 230 are gradually inwardly retracted from the side where the ports are located toward the other side of the flow channel portion.

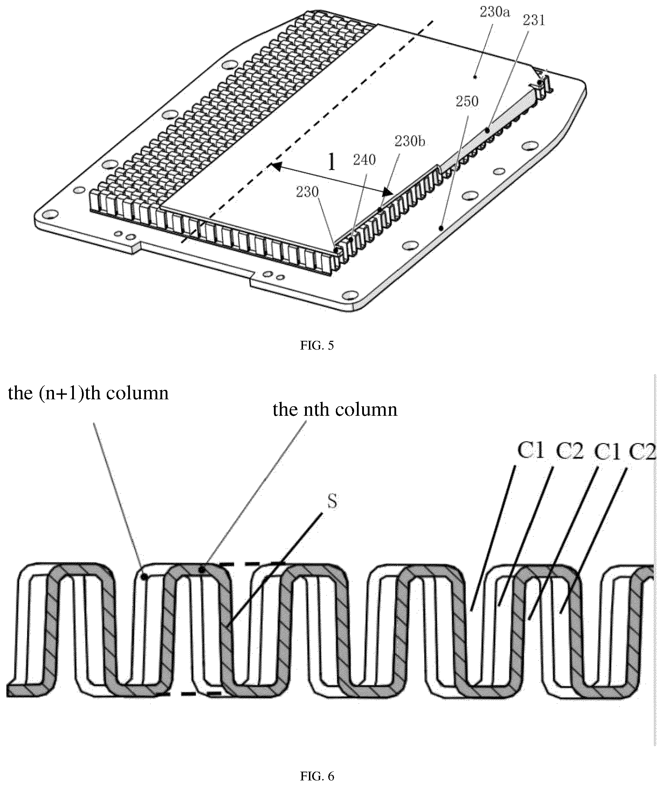

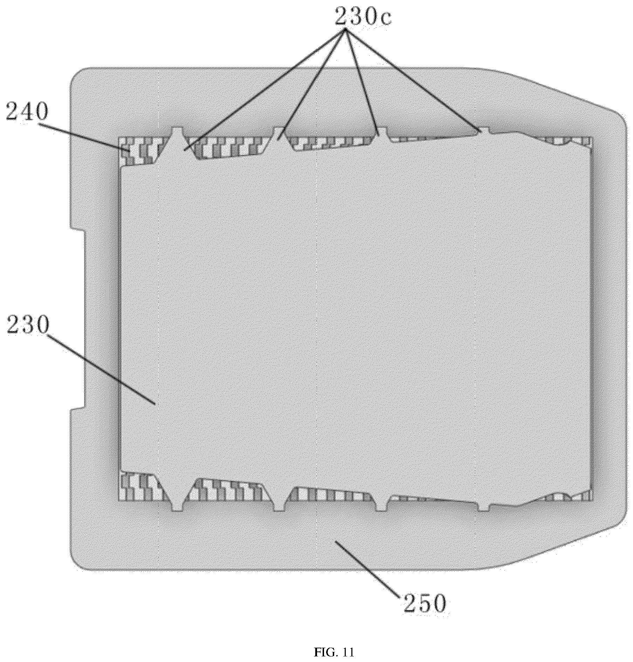

The edges of the fin pressing plate 230 may be gradually inwardly retracted in a suitable manner, as will be illustrated below with reference to two embodiments of FIGS. 5 and 11.

According to one embodiment of the present application, as shown in FIG. 5, the inward retraction of the edges of the fin pressing plate 230 is performed in sections, and specifically, the edge of the fin pressing plate 230 includes a first portion 230a capable of covering the end of the flow channel portion and a second portion 230b which exposes the end of the flow channel portion, the first portion 230a being provided with a baffle portion 231 extending vertically downward. As such, taking the fluid entering from the inlet as an example, at the first portion 230a near the port, the fluid can flow downward along the baffle portion 231 into the corresponding fluid channels; at the second portion 230b far from the port, the fluid can directly bypass the edge of the second portion and enter the corresponding fluid channels below. In other words, the fluid encounters more obstacles when entering the corresponding fluid channels from the first portion 230a than from the second portion 230b. This design prevents the fluid from mainly bypassing the edges of the fin pressing plate 230 near the port and entering the corresponding fluid channels below, resulting in less fluid at the position far from the port.

Preferably, in order to further increase the uniform distribution of the fluid in the extending direction of the main flow channel, the width l of the second portion 230b decreases gradually in the direction away from the first portion 230a, that is, the farther away from the first portion 230a, the more of the fluid channels the second portion 230b exposes, making it easier for the fluid to directly enter the fluid channels corresponding to this portion.

Furthermore, the greater the vertical extension length of the baffle portion 231, the greater its shielding effect on the corresponding fluid channels below, and the greater the degree of obstruction it poses on the fluid entering these fluid channels. Preferably, to enhance the aforementioned uniform distribution effect, the vertical extension length h of the baffle portion 231 gradually decreases in the direction towards the second portion. In other words, at the first portion 230a, as it approaches the second portion 230b, the degree of obstruction for the fluid to bypass the baffle portion 231 decreases.

Wherein, the baffle portion 231 may also function to locate the fin 240 below to ensure relative securement of the fin pressing plate 230 to the fin 240 during assembly (e.g., brazing).

According to another embodiment of the present application, as shown in FIG. 11, the edges of the fin pressing plate 230 begin to gradually retract inward from the side where the ports are located. That is, as the fin pressing plate 230 extends from the side where the ports are located toward the other side of the flow channel portion, the retraction of the fin pressing plate 230 gradually increases, thereby gradually exposing more of the flow channel portion below. Taking the fluid entering from the inlet as an example, as the fluid flows along the main flow channel, the fluid can more easily and directly bypass the edge of the fin pressing plate 230 into the corresponding fluid channels below, thereby allowing the fluid to more easily and directly enter into the fluid channels from the inlet, achieving the effect of evenly distributing the fluid along the extending direction of the main flow channel.

In order to secure a compressively locating effect of the fin pressing plate 230 on the fin 240, a plurality of projections 230c may be provided at intervals at the edges of the fin pressing plate 230, and the projections 230c extend to the end sides of the fin 240 below and elastically contact with the top cover 260 to press the fin 240 by a pressure generated by elastic deformation at the time of locating and assembling (e.g., brazing). As can be understood, as the fin pressing plate 230 extends from the side where the ports are located toward the other side of the flow channel portion, the protruding distance of the projection 230c increases so as to extend to the end side of the fin 240. In addition, the projection 230c may have a gradually tapered shape (e.g., triangular as shown) toward the outside of the fin pressing plate 230 to avoid affecting uniform fluid distribution.

In the present application, the fluid channels are the primary region of the circulation chamber assembly through which the fluid flows, and the fluid flows in the fluid channels in the extending direction of the fluid channels. Wherein, the extending direction of the fluid channels may be arranged as desired, for example, being parallel to the extending direction of the main flow channel. Preferably, in order to reduce pressure loss during fluid flowing, the extending direction of the fluid channels is perpendicular to the extending direction of the main flow channel.

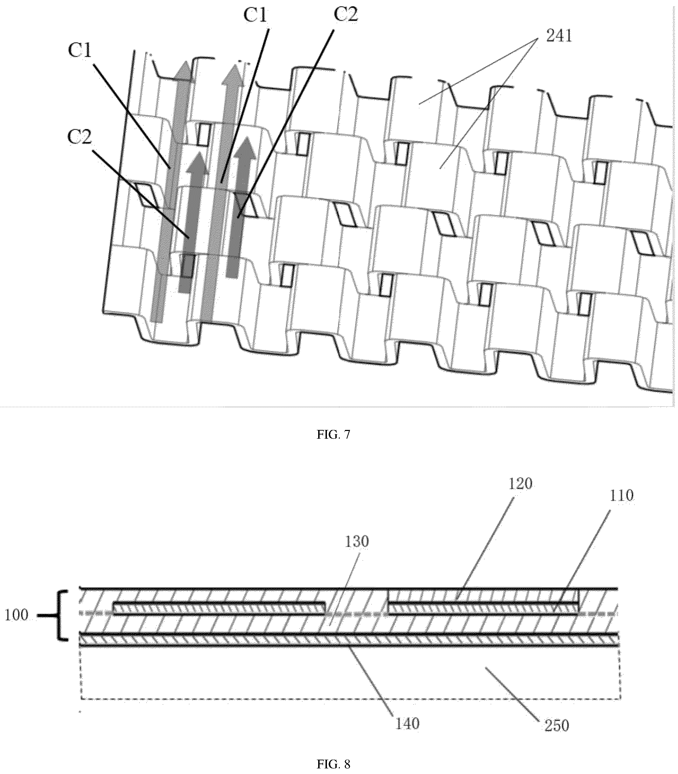

Wherein, the fluid channels may be provided in a suitable manner, for example the flow channel portion may include the fin 240 to define the fluid channels. Wherein, the fin 240 may take a suitable form, for example may include a plurality of fin portions 241 arranged side by side, wherein the plurality of fin portions 241 may form an integral fin 240. The fin portion 241 may have a suitable shape to define fluid channels of different cross-sectional shapes. Preferably, as shown in FIG. 7, the fin 240 includes a plurality of corrugated fin portions 241, the plurality of fin portions 241 are arranged side by side, and the waveforms of the adjacent fin portions 241 are arranged in a staggered manner. Wherein, the waveforms of the adjacent fin portions 241 are arranged in a staggered manner, a turbulent flow of the fluid passing through can be increased. For example, in the embodiments shown in FIGS. 6 and 7, the waveforms of the adjacent fin portions 241 are staggered and aligned every other fin portion 241, such that the fin 240 form first fluid channels C1 that allow the fluid to pass through each fin portion 241 basically unobstructed and second fluid channels C2 where some fluid strikes the waveform contours of the fin sections 241 in the flow direction to generate the turbulent flow. In particular, in the embodiment shown in FIGS. 6 and 7, the fin portion 241 has a waveform with a U-shaped cross section, and the first fluid channel C1 has a U-shaped cross section with an open top or bottom to allow the fluid to pass more smoothly (flowing along the red arrow in FIG. 7); a portion of the second fluid channel C2 has a top or bottom-open U-shaped cross-section, while another portion has a rectangular cross-section. This configuration causes the fluid to collide when transitioning from the U-shaped cross-section to the rectangular cross-section (flowing along the blue arrow in FIG. 7), thus inducing the turbulent flow and allowing the fluid to move between the first fluid channel C2 and the second fluid channel C2. On the one hand, this improves the uniformity of fluid distribution between different fluid channels; on the other hand, it increases the collision between the fluid and the fin 240, thereby enhancing heat transfer efficiency.

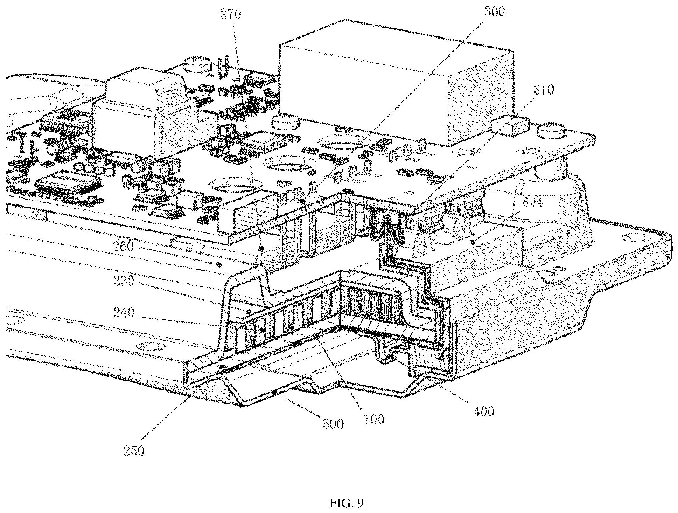

In order to form the main flow channels and create the space for arranging the flow channel portion, the circulation chamber assembly 200 may be suitably constructed. For example, in the embodiment shown in FIGS. 2 and 9, the circulation chamber assembly 200 may include a bottom plate 250 and a top cover 260, and the bottom plate 250, the fin pressing plate 230, and the top cover 260 together define the main flow channels and a space for arranging the flow channel portion. Specifically, the top cover 260 forms a chamber of the main flow channels by punching, drawing, etc., and the top cover 260 is fixed with the top surface of the fin pressing plate 230 by brazing, thereby defining the main flow channels; the fin 240 is brazed between the fin pressing plate 230 and the bottom plate 250, and the fin pressing plate 230 also functions to compressively locate the fin 240, thereby defining the flow channel portion among the fin pressing plate 230, the fin 240, and the bottom plate 250; the edges of the top cover 260 are brazed to the edges of the bottom plate 250 to form the circulation chamber assembly 200.

Wherein, the bottom plate 250, the fin pressing plate 230 and the top cover 260 may be fixed to each other by a suitable manner. Preferably, the bottom plate 250, the fin pressing plate 230 and the top cover 260 can be fixed by brazing. On one hand, the mutual fixation of the bottom plate 250, the fin pressing plate 230, and the top cover 260 can be completed in one-time brazing. On the other hand, the preparation process of the electric heater can be simplified by thermally spraying a heating element onto the bottom side of the bottom plate 250 after brazing.

In order to monitor the operation of the electric heater, temperature sensing units may be provided at corresponding positions of the main flow channels and the flow channel portion to monitor the temperatures of the main flow channels and the flow channel portion and control the electric heater according to the monitoring results in combination with the operating conditions. In the present application, the temperature sensing units may be provided in a suitable manner. In addition, depending on the position of a monitoring region, the temperature sensing units can be installed in different ways.

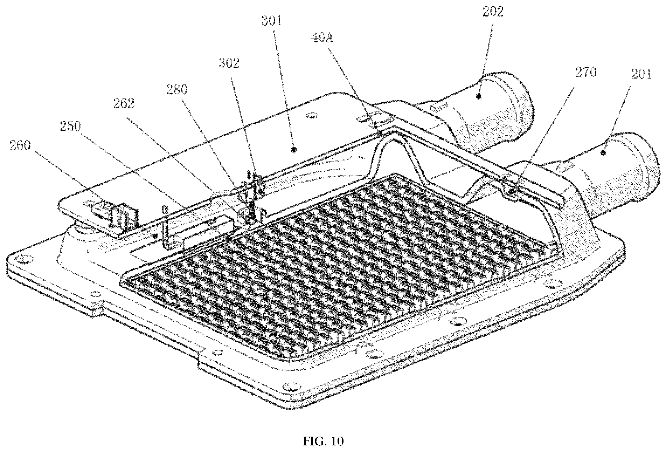

For example, in the embodiment shown in FIG. 10, to monitor the temperature of the main flow channel, the top cover 260 includes a first region defining the main flow channel, the first region being provided with a first temperature sensing unit 270 for sensing the temperature of the main flow channel by the first temperature sensing unit 270 (e.g., positioned adjacent the inlet 201 and the outlet 202 to monitor the temperature of the fluid entering and exiting the circulation chamber assembly). In addition, in order to monitor the temperature of the flow channel portion, the top cover 260 includes a second region defining a space of the flow channel portion, and the second region is provided with a second temperature sensing unit 280 to monitor the temperature of the flow channel portion by the second temperature sensing unit 280.

Wherein, the first temperature sensing unit 270 and the second temperature sensing unit 280 can take appropriate forms and be installed in corresponding manners. In an embodiment shown in FIG. 10, the first region is provided with a mounting groove 261 recessed into the main flow channel, and the first temperature sensing unit 270 is arranged within the mounting groove 261. Wherein, the mounting groove 261 is recessed into the inside of the main flow channel (i.e., an inner wall of the main flow channel is concave towards the middle of the main flow channel), thereby increasing the heat exchange area with the fluid in the main flow channel to obtain a more accurate monitoring result. The first temperature sensing unit can be in an appropriate form, for example, it can include an SMD (Surface Mounted Device) sensor, which can be brazed onto a PCBA 301 of a PCB assembly 300. The mounting groove 261 can be filled with heat transfer cement to establish thermal contact with the first temperature sensing unit. Of course, the first temperature sensing unit 270 may also take other forms and be installed in a corresponding manner.

Optionally, the temperature sensing unit monitoring the flow channel portion may be provided in other ways. In the embodiment shown in FIG. 10, the second region is provided with a through hole 262 within which the second temperature sensing unit 280 is disposed. The second temperature sensing unit may be disposed within the through hole 262 and can be in contact with the fin pressing plate 230 below the top cover 260, thereby more accurately monitoring the temperature of the flow channel portion. The second temperature sensing unit may take a suitable form and may, for example, include an NTC type thermistor, the pins of which may be secured through a protective insulating sheath 302 of the PCB assembly 300. The through hole 262 may be filled with the heat transfer cement to be in thermal contact with the second temperature sensing unit. Of course, the second temperature sensing unit 280 may also take other forms and be installed in a corresponding manner.

In addition, in the present application, the heating element may take a suitable form to reduce the size of the electric heater, preferably, the heating element is a film heating element. More preferably, as shown in FIGS. 3, 4 and 8, the heating element is a thin-film heating element 100 prepared using a thermal spray process. In particular, the thin-film heating element 100 is positioned below the circulation chamber assembly 200, and the electric heater further includes a lower cover 500 fixed to the bottom plate 250, the bottom plate 250 and the lower cover 500 defining between them a heating chamber in which the heating element is disposed. The thin-film heating element 100 is a three-layer composite structure, as shown in FIG. 8, including a resistive layer 110 (the material being NiCr or FeCrAl alloy), an insulating layer 120 and a capping layer 130, the insulating layer 120 and the capping layer 130 being formed of the same insulating material (e.g. Ceramic Al2O3), such that the resistive layer 110 is wrapped between the insulating layer 120 and the capping layer 130. Between the thin-film heating element 100 and an aluminum base surface of the bottom plate 250, there is provided a thermal buffer layer 140, typically made of NiCr alloy, with a coefficient of thermal expansion between that of aluminum and that of ceramic Al2O3 (the material of the insulating layer). Additionally, as shown in FIG. 9, the electric heater includes the PCB assembly 300 and an electrode 400 used to connect a connecting end of the heating element to the PCB assembly 300. The electrode 400 can be connected to the heating element and the PCB assembly 300 in a suitable manner. In the prior art, the electrode 400 are usually soldered to the heating element and the PCB assembly 300 at two ends, but soldering may introduce defects such as dry joints, air gaps, and cracks. To avoid the defects associated with soldering, preferably in this application, one end of the electrode 400 is bonded and fixed to the connecting end using conductive adhesive (the conductive adhesive can be in an appropriate form, such as conductive silver paste), and the PCB assembly 300 is provided with a socket 310 for plugging the other end of the electrode.

According to another aspect of the present application, an electric vehicle is provided, wherein the electric vehicle includes the electric heater of the present application.

Preferred embodiments of the present application are described in detail above, however, the present application is not limited to the specific details in the above embodiments, and many simple variations can be made to the technical solutions of the present application within the scope of the technical idea of the present application, which all belong to the protection scope of the present application.

In addition, it should be noted that the specific technical features described in the above-described detailed embodiments can be combined in any suitable manner unless there is no contradiction, and in order to avoid unnecessary repetition, various possible combinations will not be described separately in this application.

In addition, any combination of the various embodiments of the present application can be made without departing from the spirit of the present application and should be considered as disclosed herein.

## Claims

1. A circulation chamber assembly of an electric heater, **characterized in that**, the circulation chamber assembly (200) comprises a flow channel portion, two main flow channels, and a fin pressing plate (230), the flow channel portion comprises a fin (240), the fin (240) defines a plurality of fluid channels arranged horizontally, the two main flow channels are respectively arranged above two ends of the flow channel portion, and the fin pressing plate (230) compressively locates the fin (240) from above, and two side edges of the fin pressing plate (230) protrude into the main flow channels to allow fluid to flow between the main flow channels and the flow channel portion by bypassing the two side edges of the fin pressing plate (230).

2. The circulation chamber assembly of an electric heater according to claim 1, **characterized in that** the circulation chamber assembly (200) comprises two ports located on a same side of the flow channel portion, and the two main flow channels communicate with the two ports, respectively.

3. The circulation chamber assembly of an electric heater according to claim 2, **characterized in that**:
from the side where the ports are located toward the other side of the flow channel portion, the flow cross sections of the two main flow channels gradually decrease; and/or,
the two main flow channels are symmetrically disposed about a central plane between the two ports.

4. The circulation chamber assembly of an electric heater according to claim 2 or 3, **characterized in that** from the side where the ports are located toward the other side of the flow channel portion, the edges of the fin pressing plate (230) are gradually inwardly retracted.

5. The circulation chamber assembly of an electric heater according to claim 4, **characterized in that** the edge of the fin pressing plate (230) comprises a first portion (230a) capable of covering an end of the flow channel portion and a second portion (230b) which exposes the end of the flow channel portion, the first portion (230a) is provided with a baffle portion (231) extending vertically downward, preferably, a vertical extension length of the baffle portion (231) gradually decreases in a direction toward the second portion (230b); and/or, in a direction away from the first portion (230a), the width l of the second portion (230b) gradually decreases.

6. The circulation chamber assembly of an electric heater according to claim 1, **characterized in that** an extending direction of the fluid channel is perpendicular to an extending direction of the main flow channel.

7. The circulation chamber assembly of an electric heater according to claim 1, **characterized in that** the fin (240) comprises a plurality of corrugated fin portions (241), a plurality of fin portions (241) are arranged side by side, and the waveforms of the adjacent fin portions (241) are arranged in a staggered manner.

8. The circulation chamber assembly of an electric heater according to claim 1, **characterized in that** the circulation chamber assembly (200) comprises a bottom plate (250) and a top cover (260), the bottom plate (250), the fin pressing plate (230) and top cover (260) together define the main flow channels and a space for arranging the flow channel portion.

9. The circulation chamber assembly of an electric heater according to claim 8, **characterized in that**:
the bottom plate (250), the fin (240), the fin pressing plate (230) and the top cover (260) are fixed by brazing; and/or,
the top cover (260) comprises a first region defining the main flow channel, the first region being provided with a first temperature sensing unit (270); and/or, the top cover (260) comprises a second region defining the space of the flow channel portion, the second region being provided with a second temperature sensing unit (280).

10. An electric heater, **characterized by** comprising the circulation chamber assembly of an electric heater according to any one of claims 1 to 9.

11. The electric heater according to claim 10, **characterized in that**, the electric heater comprises a heating element arranged below the circulation chamber assembly (200) corresponding to the flow channel portion, preferably, a horizontal projection of the flow channel portion on an arrangement plane of the fluid channels is located inside a horizontal projection of the heating element on the plane, and an edge of a horizontal projection of the main flow channel on the plane is located outside the horizontal projection of the heating element on the plane.

12. The electric heater according to claim 11, **characterized in that** the heating element is a film heating element, preferably a thin-film heating element (100).

13. The electric heater according to any one of claims 10-12, **characterized in that** the electric heater comprises a PCB assembly (300) and an electrode (400) for connecting a connecting end of the heating element to the PCB assembly (300), one end of the electrode (400) and the connecting end are bonded and fixed by conductive adhesive, the PCB assembly (300) is provided with a socket (310) for plugging the other end of the electrode (400).

14. An electric vehicle, **characterized by** comprising the electric heater according to any one of claims 10-13.
